# EUROPEAN PATENT APPLICATION

(11) **EP 4 821 735 A1**
(43) Date of publication of application: **14.10.2026**
(21) Application number: 26169281.8
(22) Date of filing: 30.03.2026
(51) Int. Cl.: B60K 35/23, B60K 35/29, B60K 35/81

(54) **DISPLAY METHOD, DISPLAY DEVICE, VEHICLE, AND PRODUCT**

(30) Priority: 07.04.2025 CN 202510429754
(71) Applicant: Xiaomi EV Technology Co., Ltd., Beijing 100176 (CN)
(72) Inventor: YUE, Qiqi, Beijing, 100176 (CN); ZHANG, Xin, Beijing, 100176 (CN); WANG, Jianzhou, Beijing, 100176 (CN)
(74) Representative: Stöckeler, Ferdinand

(57) **Abstract**

The present invention relates to a display method and a display device, which are applicable to an intelligent cockpit. The display method includes: receiving (S11) a display switching instruction for a first display area (201) of a display device (110) in a vehicle, where the display switching instruction is used to instruct a display interface in the first display area (201) to be switched from a first interface to a second interface; and displaying (S12) the second interface in the first display area (201) in response to the display switching instruction, where layout positions of display elements in the second interface within the first display area (201) are adaptively determined according to a position of the first display area (201) of the display device (110).

## Description

### TECHNICAL FIELD

The present invention relates to the technical field of intelligent driving, and in particular to a display method, a display device, a vehicle, and a product.

### BACKGROUND OF THE INVENTION

A vehicle is equipped with a display device that serves to display various types of information, such as speed information of the vehicle, range information, navigation information, and multimedia entertainment information. Different types of information may be displayed in different display areas of the display device. Information display method in the related art is possibly not conducive to intuitive acquisition of important information by a user.

### SUMMARY OF THE INVENTION

In order to overcome the problem existing in the related art, the present invention provides a display method, a display device, a vehicle, and a product. The invention is set out in the appended set of claims.

According to a first aspect of the embodiments of the present invention, a display method is provided. The display method includes:
receiving a display switching instruction for a first display area of a display device in a vehicle, where the display switching instruction is configured to instruct a display interface in the first display area to be switched from a first interface to a second interface, and the second interface includes at least two display elements; and
displaying the second interface in the first display area in response to the display switching instruction, where layout positions of the display elements in the second interface within the first display area are adaptively determined according to a position of the first display area of the display device.

Optionally, the display device includes at least two display areas, and the first display area is one of the at least two display areas of the display device.

Optionally, the at least two display areas are arranged transversely.

Optionally, the display device is configured to project onto a front windshield of the vehicle to form at least two display areas extending from one side to the other side of the front windshield.

Optionally, at least two display areas of the display device extend from one side to the other side of a center console of the vehicle.

Optionally, the second interface is an interface that is not displayed on a display area of the display device before the second interface is displayed in the first display area in response to the display switching instruction.

Optionally, the second interface is a display interface in a second display area of the display device before the second interface is displayed in the first display area in response to the display switching instruction, and the display device includes the first display area and the second display area.

Optionally, the display switching instruction is further configured to instruct a display interface in the second display area to be switched from the second interface to the first interface, and the first interface includes at least two display elements; and

Optionally, the method further includes: displaying the first interface in the second display area in response to the display switching instruction, where layout positions of the display elements in the first interface within the second display area are adaptively determined according to a position of the second display area of the display device.

Optionally, the layout positions of the display elements in the second interface within the first display area are determined by: determining an optimal observation field of view area in the first display area according to the position of the first display area of the display device; and adjusting display elements satisfying a preset condition in the second interface to the optimal observation field of view area, where the preset condition includes that the display elements are ranked in a top preset number in priority in descending order, or priorities of the display elements are greater than a preset threshold.

Optionally, audiences of the display device include a first user and a second user, and an optimal observation field of view area corresponding to the first user in the first display area is different from an optimal observation field of view area corresponding to the second user in the first display area.

Optionally, the priorities of the display elements in the second interface are determined according to at least one of the following: degrees of importance of the display elements; or degrees of attention of a user to the display elements.

Optionally, a designated display element in the second interface displayed in the first display area has a target display effect, and the designated display element is a display element located in an optimal observation field of view area in the first display area.

Optionally, the first interface includes a first card, and the second interface includes a second card, where the first card and the second card are configured to display different types of vehicle information respectively, and the display elements in the second interface are included in the second card.

Optionally, the first card is one of a plurality of preset cards, and the second card is another one of the plurality of preset cards, where the plurality of preset cards include a dashboard card, a navigation card, an entertainment card, and a time display card.

Optionally, the dashboard card includes at least two of the following display elements: speed information of the vehicle, speed limit information, mileage information, remaining energy information of the vehicle, driving mode information of the vehicle, gear information of the vehicle, and rotation speed information of a driving motor.

Optionally, the second card is the dashboard card, and the dashboard card includes the speed information of the vehicle and the speed limit information; the speed information of the vehicle and the speed limit information are located at a first position in the first display area in a case where the second interface is displayed in the first display area, where the first position is one of a left position and a right position; and the speed information of the vehicle and the speed limit information are located at a second position in a second display area in a case where the second interface is displayed in the second display area, where the second position is the other one of the left position and the right position; the display device includes the first display area and the second display area.

Optionally, the navigation card includes at least two of the following display elements: road navigation information, information configured to indicate vehicle turning, estimated time information of arrival at a destination, remaining navigation distance information from the destination, and estimated remaining navigation duration information.

Optionally, the entertainment card includes at least two of the following display elements: name information of multimedia content played in the vehicle, volume information of the multimedia content, playback mode information of the multimedia content, and information about people associated with the multimedia content.

Optionally, the time display card includes at least two of the following display elements: current time information, calendar information, and clock information.

Optionally, the first interface includes at least two cards, the second interface includes at least two cards, and the cards included in the first interface are different from the cards included in the second interface, where each card includes at least one display element.

According to a second aspect of the embodiments of the present invention, a display device is provided. The display device includes:
a reception module, configured to receive a display switching instruction for a first display area of the display device in a vehicle, where the display switching instruction is configured to instruct a display interface in the first display area to be switched from a first interface to a second interface, and the second interface includes at least two display elements; and
a first display module, configured to display the second interface in the first display area in response to the display switching instruction, where layout positions of the display elements in the second interface within the first display area are adaptively determined according to a position of the first display area of the display device.

According to a third aspect of the embodiments of the present invention, a display device is provided. The display device includes:
a processor; and
a memory configured to store processor executable instructions, where the processor is configured to execute the executable instructions in the memory to implement steps of the display method according to the first aspect of the present invention.

According to a fourth aspect of the embodiments of the present invention, a vehicle is provided. The vehicle includes:
the display device according to the second aspect of the present invention.

According to a fifth aspect of the embodiments of the present invention, a computer-readable storage medium is provided. The computer-readable storage medium stores a computer program, and the computer program, when executed by a processor, implements steps of the display method according to the first aspect of the present invention.

According to a sixth aspect of the embodiments of the present invention, a computer program product is provided. The computer program product includes a computer program, where the computer program, when executed by a processor, implements steps of the display method according to the first aspect of the present invention.

The technical solution according to the embodiments of the present invention can have the following beneficial effects.

In the above technical solution, the display switching instruction is configured to instruct the display interface in the first display area to be switched from the first interface to the second interface, where the second interface includes the at least two display elements, and the second interface is displayed in the first display area in response to the display switching instruction. The layout positions of the display elements in the second interface within the first display area are adaptively determined according to the position of the first display area of the display device. In this way, a position in the first display area that is easier for the user to see can be determined according to the position of the first display area of the display device. Thus, the position in the first display area that is easier for the user to see can be used as a layout position of a display element with a higher priority in the second interface, which is convenient for the user to acquire important information more intuitively in a driving process, and driving safety and user experience are improved.

It should be understood that the above general description and the following detailed description are merely illustrative and explanatory, and cannot limit the present invention.

### BRIEF DESCRIPTION OF DRAWINGS

The accompanying drawings here are incorporated in the description as a constituent part of the description, illustrate embodiments conforming to the present invention, and serve to explain the principle of the present invention along with the description.
FIG. 1 is a flowchart of a display method according to an example.
FIG. 2 is a schematic diagram of a display area according to an example.
FIG. 3 is a schematic diagram of a display interface in a display area before receiving a display switching instruction according to an example.
FIG. 4 is a schematic diagram of a display interface in a display area after responding to the display switching instruction according to an example.
FIG. 5 is a schematic diagram of an optimal observation field of view area corresponding to a user in a display area according to an example.
FIG. 6 is a schematic diagram of a display interface in a display area after responding to the display switching instruction according to an example.
FIG. 7 is a schematic diagram of a display interface in a display area after responding to the display switching instruction according to an example.
FIG. 8 is a schematic diagram of a display interface in a display area before receiving the display switching instruction according to an example.
FIG. 9 is a schematic diagram of a display interface in a display area after responding to the display switching instruction according to an example.
FIG. 10 is a schematic diagram of a display interface in a display area before receiving the display switching instruction according to an example;
FIG. 11 is a schematic diagram of a display interface in a display area after responding to the display switching instruction according to an example.
FIG. 12 is a schematic diagram of a display interface in a display area after responding to the display switching instruction according to an example.
FIG. 13 is a block diagram of a display device according to an example.
FIG. 14 is a block diagram of a vehicle according to an example.
FIG. 15 is a block diagram of a device for display according to an example.

### DETAILED DESCRIPTION OF THE INVENTION

The examples will be described in detail here and are illustratively shown in the accompanying drawings. When the following description refers to the accompanying drawings, the same numbers in different accompanying drawings represent the same or similar elements unless otherwise indicated. The implementations described in the following examples do not represent all the implementations consistent with the present invention. On the contrary, the implementations are merely examples of a device and a method consistent with some aspects of the present invention as detailed in the appended claims.

It should be noted that all actions to acquire signals, information or data in the present invention are performed on the premise of complying with corresponding data protection regulations and policies of the country in which the present invention is applied and under the condition of obtaining authorization by an owner of a corresponding device.

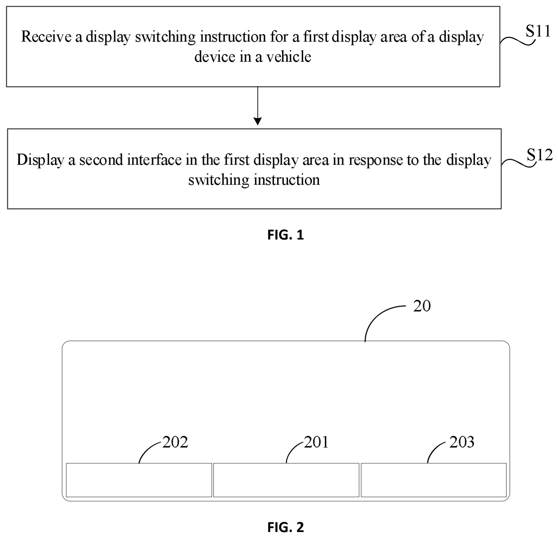

FIG. 1 is a flowchart of a display method according to an example. The method may be performed by a controller configured to control display of a display device arranged in a vehicle. The controller may be integrated with the display device or separated from the display device. As shown in FIG. 1, the method may include steps S11 and S12.

In step S11, a display switching instruction for a first display area of the display device in the vehicle is received.

The display switching instruction is configured to instruct a display interface in the first display area to be switched from a first interface to a second interface, and the second interface includes at least two display elements.

In step S12, the second interface is displayed in the first display area in response to the display switching instruction. Layout positions of the display elements in the second interface within the first display area are adaptively determined according to a position of the first display area of the display device.

In the present invention, the display device arranged in the vehicle may include one or more display areas. For example, the display device may include one or more physical screens. For example, the physical screen includes, but is not limited to, a dashboard screen, a central control screen, an entertainment screen, etc. A screen area of one physical screen may be one display area. For another example, the display device may include one or more projection devices capable of projecting a display area. The projection devices are configured to project onto a front windshield of the vehicle. Each projection device has a projection area that serves as a single display area, and the projection device, for example, is a light engine or a projector.

In an embodiment, the display device includes at least two display areas, and the first display area is one of the at least two display areas of the display device.

In an implementation, the at least two display areas of the display device extend from one side to the other side of a center console of a vehicle. In the implementation, the display device may be a physical screen. For example, the display device may include at least two physical screens, and a screen area of one physical screen is one display area. For another example, the display device may be a strip-shaped physical screen, and a screen area of the strip-shaped physical screen may be divided into the at least two display areas.

In another implementation, the display device includes at least two projection devices capable of projecting a display area. FIG. 2 is a schematic diagram of the display area according to an example. The display device including three projection devices is taken as an example. As shown in FIG. 2, the three projection devices project onto a left position, a middle position, and a right position below a front windshield 20 of the vehicle, respectively, to form the three display areas. A display area 202 is formed by projection onto the left position below the front windshield 20 of the vehicle, a display area 201 is formed by projection onto the middle position below the front windshield 20 of the vehicle, and a display area 203 is formed by projection onto the right position below the front windshield 20 of the vehicle. The size of each display area is not limited, and may be the same or different. Moreover, two adjacent display areas may be arranged adjacently. That is, no gap may be left between the two adjacent display areas. Alternatively, a gap may exist between the two adjacent display areas to some extent, so as to separate the display areas. Different display areas may be configured to display different types of information, such that a user distinguishes the different types of the vehicle information more easily.

In an embodiment, the display device is configured to project onto the front windshield of the vehicle to form the at least two display areas extending from one side to the other side of the front windshield. As shown in FIG. 2, the three projection devices project onto the front windshield 20 of the vehicle separately to form the three display areas extending from a left side to a right side or from a right side to a left side of the front windshield, such that space below the front windshield 20 may be fully utilized.

The first display area may be one of the display areas of the display device. For example, the first display area is the display area 201.

In an embodiment of the present invention, the at least two display areas may be arranged transversely in a case that the display device in the vehicle includes the at least two display areas. For example, the three display areas are arranged transversely as shown in FIG. 2. However, in other implementations, the at least two display areas may be arranged longitudinally, for example, the at least two display areas may be arranged longitudinally along an A-pillar on the front windshield, which is not limited in the present invention.

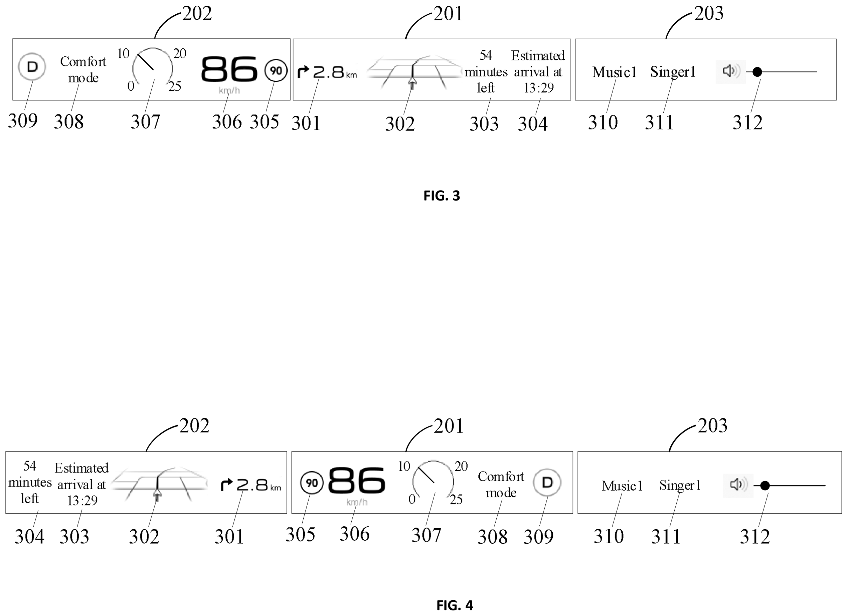

FIG. 3 is a schematic diagram of the display interface in the display area before receiving the display switching instruction according to an example. One display area may correspond to one display interface. The display interface may refer to a user interface (UI) displayed in the display area. Display elements may be UI elements displayed in the display interface. Each display element may present a type of information to a user, and a display form of the display elements may include at least one of the following: an icon, a picture, a video, a text, or a number.

As shown in FIG. 3, a display interface of the display area 201 is a navigation information interface. The display interface in the display area 201 includes a display element 301, a display element 302, a display element 303, and a display element 304. The display element 301 indicates information used to indicate vehicle turning. The display element 301 includes an icon for turning right and distance information 2.8 km indicating turning right after 2.8 km. The display element 302 indicates road navigation information. The road navigation information may be generated according to surrounding roads on which the vehicle is located, such that the road navigation information indicates route information and a traveling direction of the vehicle more intuitively. The display element 303 indicates estimated remaining navigation duration information. For example, the display element 303 is used to indicate that it is estimated that there are still 54 minutes to arrive at a destination. The destination may be set by a user, for example, on a central control platform of the vehicle or on a terminal paired with the vehicle. The display element 304 indicates estimated time information of arrival at a destination. For example, the display element 304 is used to indicate that estimated arrival at the destination is 13:29.

As shown in FIG. 3, a display interface of the display area 202 is a dashboard information interface. The display interface in the display area 202 includes a display element 305, a display element 306, a display element 307, a display element 308, and a display element 309. The display element 305 indicates speed limit information. For example, the display element 305 indicates that a current speed limit of a road is 90 km/h. The display element 306 indicates speed information of the vehicle. For example, the display element 306 indicates that a current real-time speed of the vehicle is 86 km/h. The display element 307 indicates rotation speed information of a driving motor. For example, the display element 307 is shown in the form of an icon. 0, 10, 20, and 25 indicate rotation speeds of the driving motor, and data pointed by a pointer is a current rotation speed of the driving motor of the vehicle. A unit of the rotation speed of the driving motor is RPM*1000 (not shown in the figure). The display element 308 indicates driving mode information of the vehicle. For example, the display element 308 indicates that a current driving mode of the vehicle is a comfort mode. The display element 309 indicates gear information of the vehicle. For example, the display element 309 indicates that a current gear of the vehicle is a D gear, i.e., a forward gear.

As shown in FIG. 3, a display interface of the display area 203 is an entertainment information interface. The display interface in the display area 203 includes a display element 310, a display element 311, and a display element 312. The display element 310 indicates name information of multimedia content played in the vehicle. The multimedia content may be music, audio, video, etc. The display element 310 indicates that a name of the music currently played in the vehicle is "music 1". The display element 311 indicates information about people associated with the multimedia content. The information about the people associated with the multimedia content may refer to, for example, a name and/or photo of a singer, a name and/or photo of an author, and a name and/or photo of a main character in the video. The display element 311 may indicate that the name of the singer of the music 1 is "singer 1". The display element 312 indicates volume information of the multimedia content, and the display element 312 includes a speaker icon and a volume adjustment progress bar.

For example, the display switching instruction may be input by the user. For example, the user may input the display switching instruction by voice. A microphone in the vehicle is connected with the controller. The microphone may send the display switching instruction to the controller after receiving the display switching instruction input by the user via the voice. For another example, the user may input the display switching instruction via any display screen in the vehicle, the display screen is connected with the controller, and the display screen may send the display switching instruction to the controller. Alternatively, the user may input the display switching instruction via a terminal such as a mobile phone or a tablet computer. The terminal may be paired with the vehicle, or the terminal may be connected with the controller via Bluetooth, and may send the display switching instruction to the controller. A manner in which the user issues the display switching instruction is not limited.

The display switching instruction may be configured to instruct the display interface in the first display area to be switched from a first interface to a second interface. The display area 201 serving as the first display area is described as an example. As shown in FIG. 3, the first interface in the display area 201 is the navigation information interface. For example, the display switching instruction is an instruction used to instruction switching an interface in a middle display area to the dashboard information interface as stated by the user.

FIG. 4 is a schematic diagram of a display interface in a display area after responding to the display switching instruction according to an example. As shown in FIG. 4, the dashboard information interface (i.e., the second interface) is displayed in the display area 201 in response to the display switching instruction. The second interface includes at least two display elements. As shown in FIG. 4, the second interface includes, for example, the display element 305, the display element 306, the display element 307, the display element 308, and the display element 309.

In the present invention, layout positions of the display elements in the second interface within the first display area are adaptively determined according to a position of the first display area of the display device. The layout positions may refer to positions at which the display elements are displayed in the first display area, or may refer to a layout arrangement manner of the plurality of display elements in the first display area.

A driver on a left side of a front row is taken as an example. A position of the display area 201 of the display device is a middle position, and a left area in the display area 201 is closer to the driver and is more intuitively visible to the driver. Thus, as shown in FIG. 4, the left area in the display area 201 may be configured to display display elements with high priorities in the second interface. For example, priorities of the speed limit information and the speed information of the vehicle are higher. Thus, the layout positions of the speed limit information and the speed information of the vehicle in the display area 201 may be within the left area in the display area 201, and the driver may more intuitively see the current speed limit information of a road and the current speed information of the vehicle.

Through the above technical solution, the display switching instruction is configured to instruct the display interface in the first display area to be switched from the first interface to the second interface, where the second interface includes the at least two display elements, and the second interface is displayed in the first display area in response to the display switching instruction. The layout positions of the display elements in the second interface within the first display area are adaptively determined according to the position of the first display area of the display device. In this way, a position in the first display area that is easier for the user to see can be determined according to the position of the first display area of the display device. Thus, the position in the first display area that is easier for the user to see can be used as a layout position of a display element with a higher priority in the second interface, which is convenient for the user to acquire important information more intuitively in a driving process, and driving safety and user experience are improved.

An implementation of determining the layout positions of the display elements in the second interface within the first display area in the present invention will be introduced below.

In an embodiment, the layout positions of the display elements in the second interface within the first display area are determined by the following manner:
determining an optimal observation field of view area in the first display areas according to the position of the first display area of the display device; and
adjusting display elements satisfying a preset condition in the second interface to the optimal observation field of view area, where the preset condition includes that the display elements are ranked in a top preset number in priority in descending order, or priorities of the display elements are greater than a preset threshold.

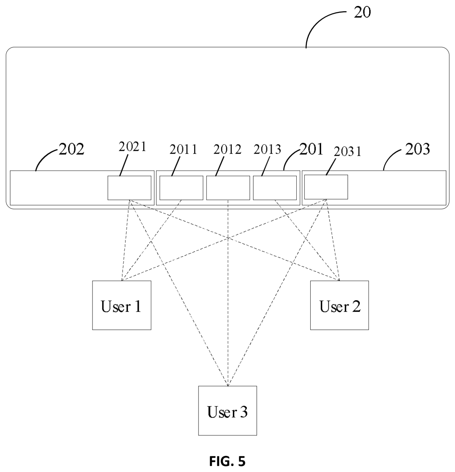

FIG. 5 is a schematic diagram of an optimal observation field of view area corresponding to a user in a display area according to an example. A dashed line may represent a line of sight of the user. As shown in FIG. 5, a user 1 may be a driver user of the vehicle, i.e., a driver of the vehicle, a user 2 may be a co-driver user of the vehicle, and a user 3 may be a user in the middle position of a rear row of the vehicle.

A display area 202 is located at a left position in the display device. The display area located below the front windshield of the vehicle is taken as an example. Due to an influence of a curved left edge of the front windshield, for the user 1, it is not easier for the user 1 to see the left position and a middle position in the display area 202 relative to a right position in the display area 202. That is, it is easier for the user 1 to see the right position in the display area 202. Thus, an area 2021 in the display area 202 is an optimal observation field of view area for the user 1. A display area 201 is located at a middle position of the display device, a left position in the display area 201 is closest to the user 1, and it is easier for the user 1 to see the left position in the display area 201. Thus, an area 2011 in the display area 201 is an optimal observation field of view area for the user 1. A display area 203 is located at a right position of the display device, a left position in the display area 203 is closest to the user 1, and it is easier for the user 1 to see the left position in the display area 203. Thus, an area 2031 in the display area 203 is an optimal observation field of view area for the user 1.

Due to an influence of a curved right edge of the front windshield, for the user 2, it is not easier for the user 2 to see the right position and a middle position in the display area 203 relative to a left position in the display area 203. That is, it is easier for the user 2 to see the left position in the display area 203. Thus, the area 2031 in the display area 203 is the optimal observation field of view area for the user 2. The display area 201 is located at the middle position of the display device, a right position in the display area 201 is closest to the user 2, and it is easier for the user 2 to see the right position in the display area 201. Thus, an area 2013 in the display area 201 is an optimal observation field of view area for the user 2. The display area 202 is located at the left position of the display device, the right position in the display area 202 is closest to the user 2, and it is easier for the user 2 to see the right position in the display area 202. Thus, the area 2021 in the display area 202 is the optimal observation field of view area for the user 2.

For the user 3, it is easier for the user 3 to see the right position in the display area 202. Thus, the area 2021 in the display area 202 is the optimal observation field of view area for the user 3. It is easier for the user 3 to see a middle position in the display area 201. Thus, an area 2012 in the display area 201 is an optimal observation field of view area for the user 3. It is easier for the user 3 to see the left position in the display area 203. Thus, the area 2031 in the display area 203 is the optimal observation field of view area for the user 3.

For optimal observation field of view areas corresponding to other users in the vehicle, such as a user in the right position of the rear row and user in the left position of the rear row, reference may be made to the above analysis.

In an embodiment, audiences of the display device include a first user and a second user, and an optimal observation field of view area corresponding to the first user in the first display area is different from an optimal observation field of view area corresponding to the second user in the first display area.

For example, the first user is the driver user, i.e., the user 1 shown in FIG. 5, and the second user is the co-driver user, i.e., the user 2 shown in FIG. 5. The display area 201 serving as the first display area is taken as an example. In the display area 201, the optimal observation field of view area corresponding to the user 1 is the area 2011, and the optimal observation field of view area corresponding to the user 2 is the area 2013.

For example, the first user is the driver user, i.e., the user 1 shown in FIG. 5, and the second user is the user in the middle position of the rear row, i.e., the user 3 shown in FIG. 5. The display area 201 serving as the first display area is taken as an example. In the display area 201, the optimal observation field of view area corresponding to the user 1 is the area 2011, and the optimal observation field of view area corresponding to the user 3 is the area 2012.

That is, in this embodiment of the present invention, the optimal observation field of view areas in the first display area are different for users at different positions in the vehicle. Thus, in the present invention, the optimal observation field of view area corresponding to a target user in the first display area may be determined according to the position of the first display area of the display device and a position of the target user in the vehicle. For example, the target user may be a user with a highest preset priority among the audiences of the display device, such as the driver user (the user 1 shown in FIG. 5). The display area 201 serving as the first display area is taken as an example. It may be determined that the optimal observation field of view area in the display area 201 is the area 2011 according to the position of the display area 201 of the display device (i.e., the middle position of the display device) and the position of the user 1 in the vehicle. For example, the target user may be a user issuing display switching instruction. A camera may be arranged in the vehicle, and may monitor which user issues the display switching instruction in the vehicle. For example, the camera monitors that the co-driver user (the user 2 shown in FIG. 5) issues the display switching instruction via voice. The display area 201 serving as the first display area is taken as an example. According to the position of the display area 201 of the display device (i.e., the middle position of the display device) and the position of the user 2 in the vehicle, it may be determined that the area 2013 is the optimal observation field of view area in the display area 201.

For each display area, information about the optimal observation field of view areas in the display area corresponding to the users at different positions in the vehicle may be stored in a memory of the vehicle previously, and the controller may obtain the optimal observation field of view area corresponding to the target user from the memory. For example, the optimal observation field of view area corresponding to the user 1 in the display area 201 is the area 2011, and the optimal observation field of view area corresponding to the user 2 in the display area 201 is the area 2013, which may be stored in the memory. The controller may determine the corresponding optimal observation field of view area according to the position of the first display area, to which the display switching instruction is directed, of the display device and the position of the target user.

Thus, the determined optimal observation field of view area is adapted to the position of the target user, and it is convenient for the user to obtain important information more intuitively in a driving process by adjusting the display elements with high priorities to the optimal observation field of view area.

In the present invention, the priorities of the display elements in the second interface are determined according to at least one of the following: degrees of importance of the display elements; or degrees of attention of a user to the display elements.

In an embodiment, the priorities of display elements in the second interface are determined according to the degrees of importance of the display elements. Information used to indicate the degrees of importance of the display elements may be stored in the vehicle, and the degrees of importance of the display elements may be preset before the vehicle is delivered, or may be manually set by a user. For example, display elements of dashboard type, sorted in descending order of their degrees of importance, are the speed limit information, the speed information of the vehicle, the rotation speed information of the driving motor, the driving mode information of the vehicle, the gear information of the vehicle, remaining energy information of the vehicle, and mileage information in sequence. Display elements of navigation type, sorted in descending order of their degrees of importance, are the information configured to indicate vehicle turning, the road navigation information, the estimated remaining navigation duration information, the estimated time information of arrival at the destination, and the remaining navigation distance information from the destination in sequence. Display elements of entertainment type, sorted in descending order of their degrees of importance, are the name information of the multimedia content played in the vehicle, the information about the people associated with the multimedia content, the volume information of the multimedia content, and the playback mode information of the multimedia content in sequence. Display elements of time type, sorted in descending order of their degrees of importance, are the current time information, the clock information, and the calendar information in sequence. For the plurality of display elements of the same type, the higher the degree of importance of the display element is, the higher the priority of the display element is. The priorities of the display elements may be represented by, for example, numerical values.

In an embodiment, the priorities of display elements may be determined according to degrees of attention of the user to the display elements. The user may be the target user mentioned above. That is, the target user may be a user with a highest preset priority among audiences of the display device, such as the driver user, or the target user may be a user issuing the display switching instruction. For example, a direction of a line of sight of the user may be monitored by the camera to determine specific coordinates of a position at which the line of sight of the user falls on the display area, and then an interaction behavior between the line of sight of the user and a display element corresponding to the coordinates is recorded. In an example, a number of times of gazing of a display element by a user may be increased by 1 in a case where it is monitored that the user has gazed the display element. The number of times of gazing of the display element within a period of time may be used as a degree of attention of the user to the display element. Alternatively, a degree of attention may be determined according to gazing duration of the user on the display element. That is, the longer the gazing duration of the user on the display element is, the higher the degree of attention to the display element is. The higher the degree of attention of the user to the display element is, the higher a priority of the display element is.

For example, the target user is the driver user. The display elements of the dashboard type, sorted in descending order of the degrees of attention of the driver user, are the speed limit information, the speed information of the vehicle, the rotation speed information of the driving motor, the driving mode information of the vehicle, the gear information of the vehicle, the remaining energy information of the vehicle, and the mileage information in sequence. For example, the target user is the co-driver user. The display elements of the entertainment type, sorted in descending order of the degrees of attention of the co-driver user, are the name information of the multimedia content played in a vehicle, the information about the people associated with the multimedia content, the volume information of the multimedia content, and the playback mode information of the multimedia content in sequence.

In an embodiment, the priority of the display element may be determined according to both the degree of importance of the display element and the degree of attention of the user to the display element. For example, a first priority value of the display element is determined according to information stored in the vehicle and used to indicate the degree of importance of the display element, and a second priority value is determined according to the degree of attention of the user to the display element. Weighted summation is performed on the first priority value and the second priority value, there weights of the first priority value and the second priority value may be preset, and the priority of the display element is determined according to a result of the weighted summation. For example, the higher the value of weighted summation is, the higher the priority of the display element may be.

Through the above technical solution, the priorities of the display elements may be determined according to the degrees of importance and/or the degrees of attention of the user. In a driving process of the vehicle, the degrees of attention of the user to each display element may be different in different driving scenarios. For example, the user may pay more attention to the navigation information during driving on an expressway, and the user may pay more attention to the speed limit information during driving on an urban road. Thus, the priorities of the display elements are determined according to the degrees of importance and/or the degrees of attention of the user, and the display elements which are more important and to which the user pays more attention may be displayed at positions that the user sees more easily in the display area.

Embodiments of adjusting the display elements satisfying the preset condition in the second interface to the optimal observation field of view area will be introduced below.

In a first embodiment, the second interface is an interface that is not displayed on the display area of the display device before the second interface is displayed in the first display area in response to the display switching instruction. For example, the driver user (the user 1) wants to know the current time information, and the user 1 issues the display switching instruction. The display switching instruction instructs the display interface of the display area 201 to be switched to the time information interface. As shown in FIG. 3, a schematic diagram of the display interface in the display area before receiving the display switching instruction is provided. The time information interface is a display interface not displayed in three display areas.

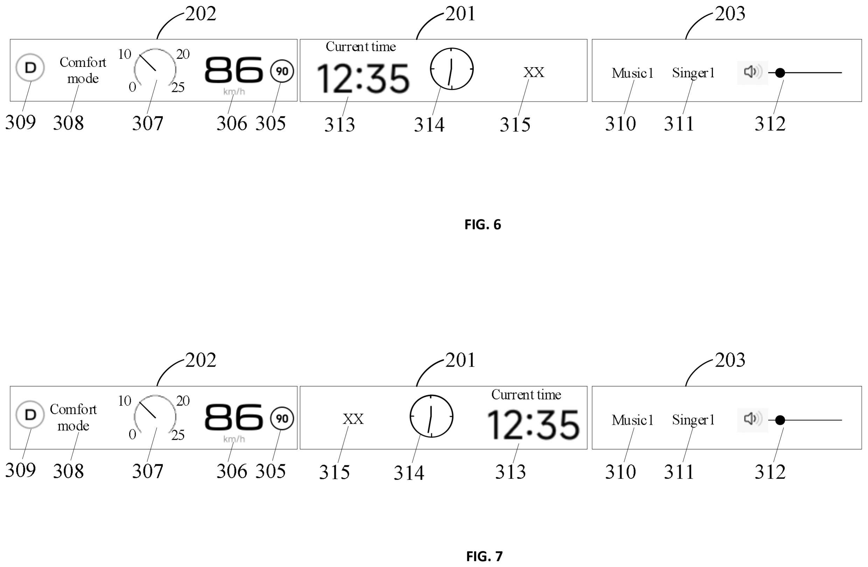

For example, the display elements of the time type, sorted in descending order of their priorities, are the current time information, the clock information, and the calendar information in sequence. The display elements are ranked in the top preset number in priority in descending order may be adjusted to the optimal observation field of view area 2011 corresponding to the user 1 in the display area 201. For example, the preset number is one, and a display element with the highest priority is the current time information. The current time information is adjusted to the optimal observation field of view area 2011 corresponding to the user 1 in the display area 201. Moreover, as shown in FIG. 5, for the user 1, a degree of intuitiveness of the area 2012 in the display area 201 is medium, and a degree of intuitiveness of the area 2013 is the lowest. Thus, the clock information may be adjusted to the area 2012 in the display area 201, and the calendar information may be adjusted to the area 2013 in the display area 201. As shown in FIG. 6, a schematic diagram of the display interface in the display area after responding to the display switching instruction in this embodiment is provided. The time information interface (i.e., the second interface) displayed in the display area 201 includes a display element 313, a display element 314, and a display element 315. The display element 313 indicates the current time information, for example, the current time is 12:35. The display element 314 indicates the clock information, and the display element 315 indicates the date information. A specific date is omitted by XX in the drawings.

In a second embodiment, for example, the co-driver user (the user 2) wants to know the current time information, and the user 2 issues the display switching instruction. The display switching instruction instructs the display interface of the display area 201 to be switched to the time information interface. As shown in FIG. 3, a schematic diagram of the display interface in the display area before receiving the display switching instruction is provided. The time information interface is the display interface not displayed in the three display areas. Ranking of priorities of the display elements of the time type has been introduced above, and the current time information may be adjusted to the optimal observation field of view area 2013 corresponding to the user 2 in the display area 201. Moreover, as shown in FIG. 5, for the user 2, a degree of intuitiveness of the area 2012 in the display area 201 is medium, and a degree of intuitiveness of the area 2011 is the lowest. Thus, the clock information may be adjusted to the area 2012 in the display area 201, and the calendar information may be adjusted to the area 2011 in the display area 201. As shown in FIG. 7, a schematic diagram of the display interface in the display area after responding to the display switching instruction in this embodiment is provided.

In a third embodiment, the second interface is the display interface in the second display area of the display device before the second interface is displayed in the first display area in response to the display switching instruction. The display switching instruction is further configured to instruct the display interface in the second display area to be switched from the second interface to the first interface, and the first interface includes at least two display elements.

As shown in FIG. 3, a schematic diagram of the display interface in the display area before receiving the display switching instruction is provided. For example, the display switching instruction is issued by the driver user (the user 1), and is configured to instruct the navigation information interface (the first interface) in the display area 201 to be switched to the dashboard information interface (the second interface), and the dashboard information interface (the second interface) in the display area 202 to be switched to the navigation information interface (the first interface). The first display area is the display area 201, and the second display area is the display area 202. That is, the display switching instruction instructs the display interface in the display area 201 and the display interface in the display area 202 to be switched.

The display method according to the present invention may further include: displaying the first interface in the second display area in response to the display switching instruction, where layout positions of the display elements in the first interface within the second display area are adaptively determined according to a position of the second display area of the display device.

The layout positions of the display elements in the first interface within the second display area are determined by the following manner:
determining an optimal observation field of view area in the second display area according to the position of the second display area of the display device; and adjusting display elements satisfying the preset condition in the second interface to the optimal observation field of view area. The preset condition includes that the display elements are ranked in a top preset number in priority in descending order, or priorities of the display elements are greater than a preset threshold.

For the display area 201, in the display elements of the dashboard type, display elements with priorities ranked in the top preset number (the preset number is, for example, 2) in descending order are the speed limit information and the speed information of the vehicle, or display elements with priorities greater than the preset threshold are the speed limit information and the speed information of the vehicle. The speed limit information and the speed information of the vehicle, i.e., the display element 305 and the display element 306, may be adjusted to the optimal observation field of view area 2011 corresponding to the user 1 in the display area 201. Moreover, according to priorities of other display elements of the dashboard type, and degrees of intuitiveness of the user 1 on the area 2012 and the area 2013, the rotation speed information of the driving motor may be adjusted to the area 2012, and the driving mode information of the vehicle and the gear information of the vehicle may be adjusted to the area 2013.

For the display area 202, in the display elements of the navigation type, display elements with priorities ranked in the top preset number (the present number is, for example, 1) in descending order include the information configured to indicate vehicle turning. The information configured to indicate vehicle turning, i.e., the display element 301, may be adjusted to the optimal observation field of view area 2021 corresponding to the user 1 in the display area 202. For other display elements of the navigation type, degrees of intuitiveness of the user 1 on the display area 202 is reduced sequentially from right to left. Thus, the road navigation information, the estimated remaining navigation duration information, and the estimated time information of arrival at the destination may be arranged sequentially from right to left in an order of priorities from high to low. As shown in FIG. 4, a schematic diagram of the display interface in the display area after responding to the display switching instruction in this embodiment is provided.

Through the above solution, the display elements which are more important and to which the user pays more attention can be displayed at positions that the user sees more easily in the display area, such that it is convenient for the user to obtain important information more intuitively in a driving process, and driving safety and user experience are improved.

In the present invention, a designated display element in the second interface displayed in the first display area has a target display effect, and the designated display element is a display element located in the optimal observation field of view area in the first display area.

For example, a display effect of the designated display element may be different from display effects of other display elements in the second interface. For example, the target display effect may be, for example, enlargement, a specific background color, highlighting, an applied animation effect, etc.

In an embodiment, the designated display element may have the target display effect when the second interface is displayed in the first display area in response to the display switching instruction.

In another embodiment, the display effect of the designated display element may be dynamically adjusted to the target display effect after the second interface is displayed in the first display area, such that a user pays more attention to the designated display element and improves a display effect of the display element.

In an implementation of the present invention, the first interface includes a first card, and the second interface includes a second card. The first card and the second card are configured to display different types of vehicle information respectively, and the display elements in the second interface are included in the second card. A card may be a card component, and is mostly used as a container for information aggregation display.

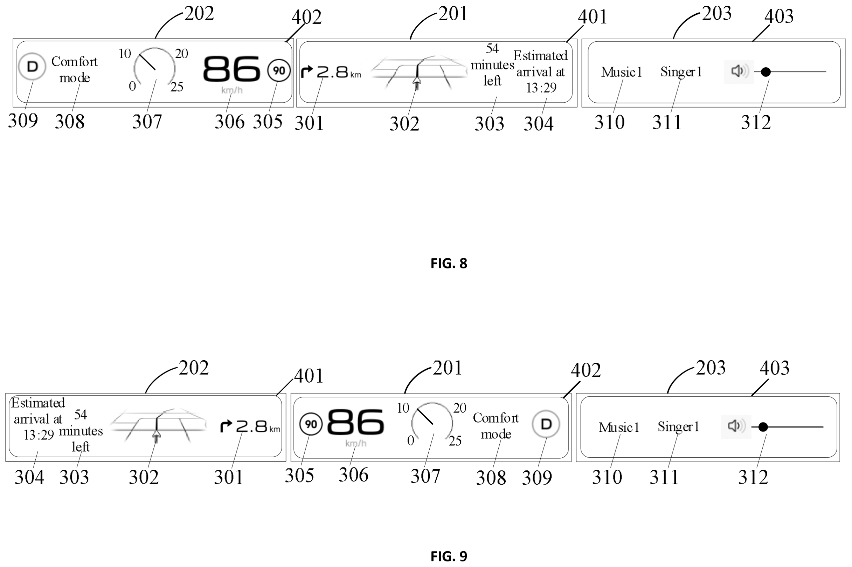

FIG. 8 is a schematic diagram of the display interface in the display area before receiving the display switching instruction according to an example. A display interface of each display area is the same as that in FIG. 3. The display area 201 is the first display area, the first interface includes a first card 401, and the first card 401 is a navigation card. The display area 202 is a second display area, the display interface of the display area 202 includes a second card 402, and the second card 402 is a dashboard card. FIG. 9 is a schematic diagram of the display interface in the display area after responding to the display switching instruction according to an example. A display interface of each display area is the same as that in FIG. 4. As shown in FIG. 9, the second interface in the display area 201 includes the second card 402, and the display interface in a display area 202 includes the first card 401. That is, one display interface may be in the form of one card. In a case that the display switching instruction instructs the display interface in the display area 201 and the display interface in the display area 202 to be switched, the first card 401 and the second card 402 may be switched, and then layout positions of display elements in the cards are adjusted.

As shown in FIGs. 8 and 9, the display area 203 includes a card 403, and the card 403 is an entertainment card.

For example, the first card is one of a plurality of preset cards, and the second card is another one of the plurality of preset cards. The plurality of preset cards include the dashboard card, the navigation card, the entertainment card, and a time display card.

For example, the dashboard card includes at least two of the following display elements: the speed information of the vehicle, the speed limit information, the mileage information, the remaining energy information of the vehicle, the driving mode information of the vehicle, the gear information of the vehicle, and the rotation speed information of the driving motor. The mileage information may be mileage of current driving, or may be total mileage of the vehicle. The remaining energy information of the vehicle may include remaining battery power of the vehicle or remaining fuel level of the vehicle. The remaining energy information of the vehicle may include both the remaining battery power of the vehicle and the fuel level of the vehicle in a case where the vehicle is a hybrid vehicle. The dashboard card in the figure shown in this embodiment of the present application does not show the mileage information and the remaining energy information of the vehicle.

In an embodiment, a user may set which display elements are displayed in the card. For example, the user may perform a setting via the central control platform of the vehicle or via the terminal paired with the vehicle. For example, the user may set that the remaining energy information of the vehicle is displayed in the dashboard card without displaying the driving mode information of the vehicle. The navigation card, the entertainment card and the time display card are similar to the dashboard card.

In an implementation, the second card is the dashboard card, and the dashboard card includes the speed information of the vehicle and the speed limit information;
the speed information of the vehicle and the speed limit information are located at a first position in the first display area and the first position is one of a left position and a right position in a case where the second interface is displayed in the first display area; and
the speed information of the vehicle and the speed limit information are located at a second position in the second display area and the second position is the other one of the left position and the right position in a case where the second interface is displayed in the second display area, and the display device includes the first display area and the second display area.

As shown in FIG. 8, the speed information of the vehicle and the speed limit information are on a right side in the display area 202 in a case where the dashboard card is displayed in the second display area, i.e., the display area 202. As shown in FIG. 9, the speed information of the vehicle and the speed limit information are on a left side in the display area 201 in a case where the dashboard card is displayed in the first display area, i.e., the display area 201.

For example, the navigation card includes at least two of the following display elements: the road navigation information, the information configured to indicate vehicle turning, the estimated time information of arrival at the destination, the remaining navigation distance information from the destination, and the estimated remaining navigation duration information. The navigation card shown in the figure of this embodiment of the present application does not show the remaining navigation distance information from the destination.

For example, the entertainment card includes at least two of the following display elements: the name information of the multimedia content played in the vehicle, the volume information of the multimedia content, the playback mode information of the multimedia content, and the information about the people associated with the multimedia content. The playback mode information may be, for example, shuffle play, repeat all, or repeat one.

For example, the time display card includes at least two of the following display elements: the current time information, the calendar information, and the clock information.

In another implementation of the present invention, the first interface includes at least two cards, the second interface includes at least two cards, the cards included in the first interface are different from the cards included in the second interface, and each card includes at least one display element.

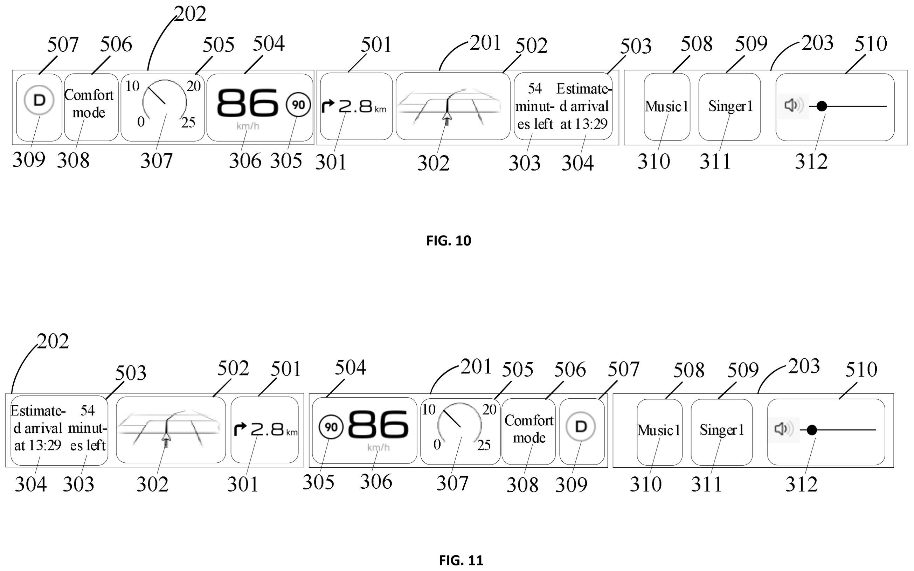

FIG. 10 is a schematic diagram of the display interface in the display area before receiving the display switching instruction according to an example. The display interface of each display area is the same as that in FIG. 3. The display area 201 is the first display area, and the first interface includes a card 501, a card 502, and a card 503. The card 501 includes one display element, and the display element indicates the information configured to indicate vehicle turning. The card 502 includes one display element, and the display element indicates the road navigation information. The card 503 includes two display elements, and the two display elements indicate the estimated remaining navigation duration information and the estimated time information of arrival at the destination. The display area 202 is the second display area, and the second interface includes a card 504, a card 505, a card 506, and a card 507. The card 504 includes two display elements, and the two display elements indicate the speed limit information and the speed information of the vehicle. The card 505 includes one display element, and the display element indicates the rotation speed information of the driving motor. The card 506 includes one display element, and the display element indicates the driving mode information of the vehicle. The card 507 includes one display element, and the display element indicates the gear information of the vehicle. The display interface of the display area 203 includes a card 508, a card 509, and a card 510. The card 508 includes one display element, and the display element indicates the name information of the multimedia content played in the vehicle. The card 509 includes one display element, and the display element indicates the information about the people associated with the multimedia content. The card 510 includes one display element, and the display element indicates the volume information of the multimedia content.

For example, the display switching instruction is configured to instruct the display interface in the display area 201 and the display interface in the display area 202 to be switched. FIG. 11 is a schematic diagram of the display interface in the display area after responding to the display switching instruction according to an example. The display interface of each display area is the same as that in FIG. 4. The display interface in the display area 201 and the display interface in the display area 202 may be switched by the following manner: adjusting the card 501, the card 502, and the card 503 to the display area 202, adjusting the card 504, the card 505, the card 506, and the card 507 to the display area 201, and determining a layout position of each card in the display areas according to priorities of display elements included in the cards. The manner of determining the layout positions of the display elements may be described with reference to the above.

A number of display elements included in one card with a card style shown in FIGs. 10 and 11 is less than a number of display elements included in one card with a card style shown in FIGs. 8 and 9. That is, the card style, such as the card style shown in FIGs. 10 and 11, may be set according to requirements. Layout positions of the display elements may be adjusted at a card level in a case where each card includes one display element. Positions of the display elements in the card may be adjusted after layout positions of the display elements are adjusted at a card level in a case where the card includes a plurality of display elements, for example, two display elements. For example, the card 504 is taken as an example. As shown in FIG. 10, the speed information of the vehicle in the card 504 is on the left in the display area 202 and the speed limit information in the card 504 is on the right in the display area 202. As shown in FIG. 11, the speed information of the vehicle in the card 504 is on the right in the display area 201and the speed limit information in the card 504 is on the left in the display area 201.

In the present invention, in an implementation in which the display interface includes at least two cards, i.e., the card style shown in FIGs. 10 and 11, the cards may be displayed across display areas. For example, assuming that FIG. 11 is a schematic diagram of the display interface in the display area before switching, in a case where it is monitored that the degrees of attention of the driver, i.e., the user 1, to the speed information of the vehicle and the speed limit information are increased significantly within a preset period of time, for example, the number of times of gazing is increased by a specified number of times, the card 504 may be adjusted to the display area 202 in order to make it easier for the user 1 to see the speed information of the vehicle and the speed limit information. Moreover, the card 504 may be adjusted to the display area 202 in a case where the display switching instruction issued by the user 1 is configured to instruct the speed information of the vehicle and the speed limit information to be switched to the display area 202.

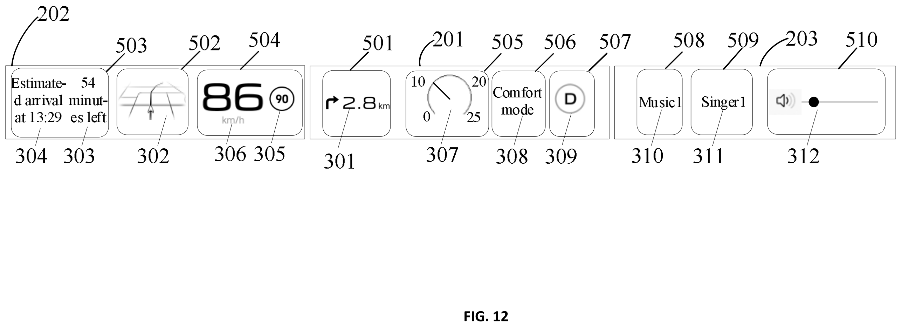

FIG. 12 is a schematic diagram of the display interface in the display area after responding to the display switching instruction according to an example. Since priorities of the speed information of the vehicle and the speed limit information are ranked in front two, which are higher in the display elements of the dashboard type, a layout position of the card 504 in the display area 202 may be determined to be the optimal observation field of view area 2021 corresponding to the user 1 in the display area 202 in a case where the card 504 is adjusted to the display area 202. That is, as shown in FIG. 12, the card 504 is adjusted to a right position in the display area 202. Moreover, as shown in FIG. 12, the card 501 may be adjusted to the optimal observation field of view area 2011 corresponding to the user 1 in the display area 201. That is, the card 501 is adjusted to a left position in the display area 201.

Moreover, an interface after adjustment shown in FIG. 12 is merely an example. For example, the card 504 is adjusted to the display area 202, and both the card 504 and the card 501 may be located in the display area 202. For example, both the card 501 and the card 504 may be located in the area 2021. For example, the card 501 is on an upper portion and the card 504 is on a lower portion. Sizes of the card 501 and the card 504 may be adjusted while the positions of the cards are adjusted, such that the display elements are not beyond an area range of the display area 202. For another example, the card 504 is adjusted to the area 2021, and sizes of the card 501, the card 502, and the card 503 are reduced. That is, the cards 501 to 504 are displayed side by side in the display area 202.

The above implementation in which cards may be displayed across the areas is merely an example, and a manner in which other cards, such as cards including the multimedia information, are adjusted across the areas is similar to that in the above implementation.

It should be noted that in each figure shown in the embodiments of the present application, a boundary box of the display area and a boundary box of the card are merely for explaining the position and size of the area and the card, and do not indicate presence of these boundary boxes in an actual scenario.

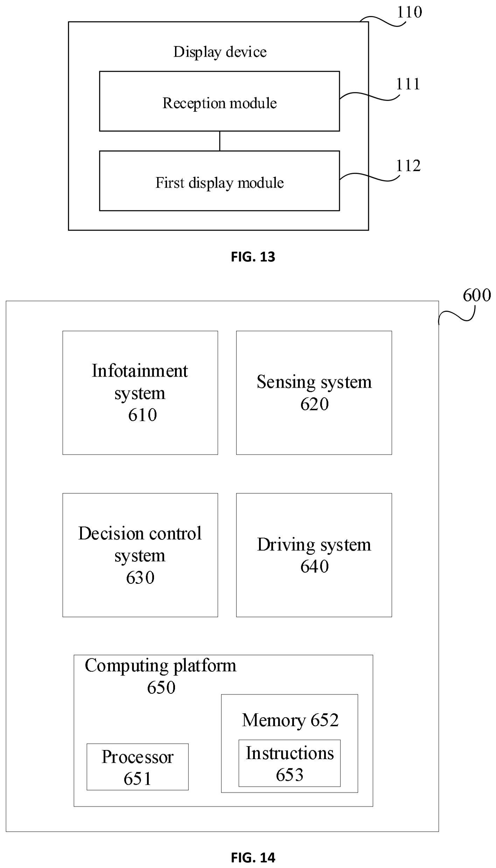

Based on the same inventive concept, the present invention further provides a display device. FIG. 13 is a block diagram of a display device according to an example. As shown in FIG. 13, the display device 110 may include:
a reception module 111, configured to receive a display switching instruction for a first display area of a display device in a vehicle, where the display switching instruction is configured to instruct a display interface in the first display area to be switched from a first interface to a second interface, and the second interface includes at least two display elements; and
a first display module 112, configured to display the second interface in the first display area in response to the display switching instruction, where layout positions of the display elements in the second interface within the first display area are adaptively determined according to a position of the first display area of the display device.

In some examples, the display device includes at least two display areas, and the first display area is one of the at least two display areas of the display device.

In some examples, the at least two display areas are arranged transversely.

In some examples, the display device is configured to project onto a front windshield of the vehicle to form the at least two display areas extending from one side to the other side of the front windshield.

In some examples, the second interface is an interface that is not displayed on the display area of the display device before the second interface is displayed in the first display area in response to the display switching instruction.

In some examples, the second interface is a display interface in the second display area of the display device before the second interface is displayed in the first display area in response to the display switching instruction, and the display device includes the first display area and the second display area.

In some examples, the display switching instruction is further configured to instruct a display interface in the second display area to be switched from the second interface to the first interface, and the first interface includes at least two display elements; and
the device 110 further includes:
a second display module, configured to display the first interface in the second display area in response to the display switching instruction, where layout positions of the display elements in the first interface within the second display area are adaptively determined according to a position of the second display area of the display device.

In some examples, the layout positions of the display elements in the second interface within the first display area are determined by the following modules:
a determination module, configured to determine an optimal observation field of view area in the first display area according to the position of the first display area of the display device; and
an adjustment module, configured to adjust display elements satisfying a preset condition in the second interface to the optimal observation field of view area, where the preset condition includes that the display elements are ranked in a top preset number in priority in descending order, or priorities of the display elements are greater than a preset threshold.

In some examples, audiences of the display device include a first user and a second user, and the optimal observation field of view area corresponding to the first user in the first display area is different from the optimal observation field of view area corresponding to the second user in the first display area.

In some examples, the priorities of the display elements in the second interface are determined according to at least one of the following: degrees of importance of the display elements; or degrees of attention of a user to the display elements.

In some examples, a designated display element in the second interface displayed in the first display area has a target display effect, and the designated display element is a display element located in the optimal observation field of view area in the first display area.

In some examples, the first interface includes a first card, the second interface includes a second card, the first card and the second card are configured to display different types of vehicle information respectively, and the display elements in the second interface are included in the second card.

In some examples, the first card is one of a plurality of preset cards, the second card is another one of the plurality of preset cards, and the plurality of preset cards include an dashboard card, a navigation card, an entertainment card, and a time display card.

In some examples, the dashboard card includes at least two of the following display elements: speed information of the vehicle, speed limit information, mileage information, remaining energy information of the vehicle, driving mode information of the vehicle, gear information of the vehicle, and rotation speed information of a driving motor.

In some examples, the second card is the dashboard card, and the dashboard card includes the speed information of the vehicle and the speed limit information;
the speed information of the vehicle and the speed limit information are located at a first position in the first display area and the first position is one of a left position and a right position in a case where the second interface is displayed in the first display area; and
the speed information of the vehicle and the speed limit information are located at a second position in a second display area and the second position is the other one of the left position and the right position in a case where the second interface is displayed in the second display area, and the display device includes the first display area and the second display area.

In some examples, the navigation card includes at least two of the following display elements: road navigation information, information configured to indicate vehicle turning, estimated time information of arrival at a destination, remaining navigation distance information from the destination, and estimated remaining navigation duration information.

In some examples, the entertainment card includes at least two of the following display elements: name information of multimedia content played in the vehicle, volume information of the multimedia content, playback mode information of the multimedia content, and information about people associated with the multimedia content.

In some examples, the time display card includes at least two of the following display elements: current time information, calendar information, and clock information.

In some examples, the first interface includes at least two cards, the second interface includes at least two cards, the cards included in the first interface are different from the cards included in the second interface, and each card includes at least one display element.

The present invention further provides a display device. The display device includes:
a processor; and
a memory configured to store processor executable instructions, where
the processor is configured to execute the executable instructions in the memory to implement steps of the display method according to the above embodiments.

The present invention further provides a vehicle. The vehicle includes:
the display device according to the above embodiments.

The present invention further provides a computer-readable storage medium. The computer-readable storage medium stores a computer program, and the computer program, when executed by a processor, implements steps of the display method according to the above embodiments.

The present invention further provides a computer program product. The computer program product includes a computer program, where the computer program, when executed by a processor, implements steps of the display method according to the above embodiments.

FIG. 14 is a block diagram of a vehicle 600 according to an example. For example, the vehicle 600 may be a hybrid vehicle, or may be a non-hybrid vehicle, an electric vehicle, a fuel cell vehicle, or other type of vehicles. The vehicle 600 may be an autonomous vehicle, a semi-autonomous vehicle, or a non-autonomous vehicle.

With reference to FIG. 14, the vehicle 600 may include various subsystems, such as an infotainment system 610, a sensing system 620, a decision control system 630, a driving system 640, and a computing platform 650. The vehicle 600 may further include more or fewer subsystems, and each subsystem may include a plurality of components. Moreover, the subsystems and the components of the vehicle 600 may be interconnected in a wired or wireless manner.

In some embodiments, the infotainment system 610 may include a communication system, an entertainment system, a navigation system, etc.

The sensing system 620 may include several types of sensors configured to sense information about an environment around the vehicle 600. For example, the sensing system 620 may include a global positioning system (the global positioning system may be a GPS system, a Beidou system, or another positioning system), an inertial measurement unit (IMU), a laser radar, a millimeter wave radar, an ultrasonic radar, and a device with a camera.

The decision control system 630 may include a computing system, a vehicle controller, a steering system, a throttle, and a braking system.

The driving system 640 may include a component that provides power motion for the vehicle 600. In an embodiment, the driving system 640 may include an engine, an energy source, a transmission system, and wheels. The engine may be one or a combination of an internal combustion engine, an electric motor, and an air compression engine. The engine is capable of converting energy provided by the energy source into mechanical energy.

Some or all of functions of the vehicle 600 are controlled by a computing platform 650. The computing platform 650 may include at least one processor 651 and a memory 652. The processor 651 may execute instructions 653 stored in the memory 652.

The processor 651 may be any conventional processor, such as a commercially available central processing unit (CPU). The processor may further include, for example, a graphic process unit (GPU), a field programmable gate array (FPGA), a system on chip (SOC), an application specific integrated circuit (ASIC), or a combination of the GPU, the FPGA, the SOC and the ASIC.

The memory 652 may be implemented by any type of volatile or non-volatile storage device, or a combination of any type of volatile or non-volatile storage device, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

Apart from the instructions 653, the memory 652 may further store data, such as a road map, route information, and a position, direction, speed, etc. of the vehicle. The data stored by the memory 652 may be used by the computing platform 650.

In the embodiments of the present invention, the processor 651 may execute the instructions 653 to complete all or some of steps of the display method described above.

In another example, a computer program product is further provided. The computer program product includes a computer program executable by a programmable device. The computer program has a code portion configured to perform the display method described above when executed by the programmable device.

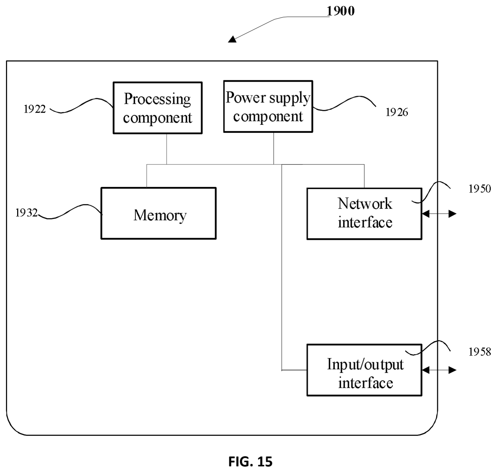

FIG. 15 is a block diagram of a device 1900 for display according to an example. For example, the deice 1900 may be provided as a controller. With reference to FIG. 15, the device 1900 includes a processing component 1922. The processing component further includes one or more processors, and a memory resource represented by a memory 1932, which is configured to store instructions, for example, an application, executable by the processing component 1922. The application stored in the memory 1932 may include one or more modules, each corresponding to a set of instructions. Further, the processing component 1922 is configured to execute the instructions to perform the display method described above.

The device 1900 may further include a power supply component 1926 configured to perform power management for the device 1900, a wired or wireless network interface 1950 configured to connect the device 1900 to a network, and an input/output interface 1958. The device 1900 may operate on an operating system stored in the memory 1932, such as Windows Server^{™}, Mac OS X^{™}, Unix^{™}, Linux^{™}, or the like.

Those skilled in the art can further understand that various illustrative logical blocks and steps listed in the embodiments of the present application can be implemented by electronic hardware, computer software, or a combination of electronic hardware and computer software. Whether such a function is implemented in hardware or software depends on a particular application and design requirements of an entire system. Those skilled in the art can implement the described functions for each particular application by various methods, but such implementation should not be considered to fall beyond the scope of protection of the embodiments of the present application.

Further, the word "illustrative" is used here to represent an example, an instance or an illustration. Any aspect or design described as "illustrative" here is not necessarily understood to be advantageous in comparison to other aspects or designs. On the contrary, use of the word illustrative is intended to present concepts in a concrete way. As used here, the term "or" is intended to represent inclusive "or" rather than exclusive "or." That is, unless otherwise specified or clear from the context, "A or B is applied to X" is intended to represent any of natural inclusive arrangements. That is, "A or B is applied to X" is satisfied in any of the below instances in a case where A is applied to X; B is applied to X; or both A and B are applied to X. In addition, unless otherwise specified or clearly indicated in the singular form from the context, the articles "a," "an" and "one" used in the present application and the appended claims are generally understood to represent "one or more."

Regarding various functions executed by the components (such as elements and resources) described above, unless otherwise indicated, the terms configured to describe such components are intended to correspond to any component (functionally equivalent) that executes the specific function of the described component, even if the terms are not structurally equivalent to the disclosed structure. In addition, although specific features of the present invention can have been disclosed with respect to merely one of several implementations, such features can be combined with one or more other features of other implementations as can be desired and advantageous for any given or specific application. In addition, the terms "comprise," "include," "have," or their variants used in the particular implementations or the claims are intended to be inclusive in a manner similar to the term "include."

In the above detailed description, reference is made to the accompanying drawings, which illustrate specific aspects of the present invention that can be practiced through illustration. In this regard, the terms indicating direction or positional relations such as "center," "longitudinal," "transverse," "length," "width," "thickness," "upper," "lower," "front," "rear," "left," "right," "vertical," "horizontal," "top," "bottom," "inside," "outside," "clockwise," "counterclockwise," "axial," "radial," and "circumferential" can be used with reference to the orientation of the described figure. Since the components of the described device can be positioned in a plurality of different orientations, the directional terms can be configured for illustrative purposes rather than restrictive purposes. It should be understood that other aspects can be utilized and structural or logical changes can be made without departing from the concepts of the present invention. Thus, the following detailed description should not be construed as limiting the present invention.

It should be understood that unless otherwise specified, various features of some embodiments of the present invention described here can be combined with each other. As used here, the term "and/or" includes any one of the items listed relevantly and any combination of any two or more of the items listed relevantly; and similarly, "at least one of..." includes any one of the items listed relevantly and any combination of any two or more of the items listed relevantly.

It should be understood that unless expressly specified and defined otherwise, the terms "engage," "attach," "mount," "connect," "connected," "fix," etc. used in the embodiments of the present invention are to be construed broadly. For instance, they may denote fixed connection, detachable connection or integral formation, denote mechanical connection, electrical connection or mutual communication, denote direct connection or indirect connection through an intermediate medium, or denote communication between interiors of two elements or interaction between two elements, unless expressly defined otherwise. For those of ordinary skill in the art, the specific meanings of the above terms here can be understood according to specific circumstances.

In addition, the term "above" used in components, elements, or material layers formed "above" a surface or located "above" a surface can be configured to indicate that the components, the elements or the material layers are "indirectly" positioned (for example, placed, formed, deposited, etc.) on the surface, such that one or more additional components, elements, or layers are arranged between the surface and the components, the elements, or the material layers. However, the term "above" used in components, elements, or material layers formed "above" a surface or located "above" a surface can further optionally have a specific meaning: the components, elements, or material layers are "directly" positioned (for example, placed, formed, deposited, etc.) on the surface, and make direct contact with the surface, for example.

Although the terms such as "first," "second," and "third" can be used here to describe various members, components, areas, layers, or sections, these members, components, areas, layers, or sections are not limited by these terms. On the contrary, these terms are merely configured to distinguish one member, component, area, layer, or section from another member, component, area, layer, or section. Thus, without departing from the teachings of each example, a first member, component, area, layer, or section mentioned in the examples described here can also be referred to as a second member, component, area, layer, or section. In addition, the terms "first" and "second" are merely for descriptive purposes and are not to be construed as indicating or implying their relative importance or implicitly specifying the number of indicated technical features. Thus, a feature defined with "first" or "second" can explicitly or implicitly include at least one of the features. In the description here, "plurality" means at least two, for example, two, three, etc., unless expressly specified otherwise.

It should be understood that spatial relative terms such as "above," "upper," "below," and "lower" used here describe a relation between one element shown in the figure and another element. The spatial relative terms are further intended to including different orientations of the device in use or operation apart from the orientations described in the accompanying drawings. For example, the element described as being "above" or on an "upper" portion relative to another element is "below" or on a "lower" portion relative to the another element in a case where the device in the figure is flipped. Thus, the term "above" includes orientations of being above and below according to the spatial orientation of the device. The device can have other ways of orientations (such as rotating by 90 degrees or being in other orientations), and the spatial relative terms used here should be explained accordingly.

## Claims

1. A display method, comprising:
receiving (S11) a display switching instruction for a first display area (201) of a display device (110) in a vehicle, wherein the display switching instruction is configured to instruct a display interface in the first display area (201) to be switched from a first interface to a second interface, and the second interface comprises at least two display elements; and
displaying (S12) the second interface in the first display area (201) in response to the display switching instruction, wherein layout positions of the display elements in the second interface within the first display area (201) are adaptively determined according to a position of the first display area (201) of the display device (110).

2. The display method according to claim 1, wherein the display device (110) comprises at least two display areas, and the first display area (201) is one of the at least two display areas of the display device (110).

3. The display method according to claim 2, wherein the at least two display areas are arranged transversely.

4. The display method according to claim 1, wherein the display device (110) is configured to project onto a front windshield (20) of the vehicle to form at least two display areas extending from one side to the other side of the front windshield (20); or
at least two display areas of the display device (110) extend from one side to the other side of a center console of the vehicle.

5. The display method according to claim 1, wherein the second interface is an interface that is not displayed on a display area of the display device (110) before the second interface is displayed (S12) in the first display area (201) in response to the display switching instruction.

6. The display method according to claim 1, wherein the second interface is a display interface in a second display area (202) of the display device (110) before the second interface is displayed (S12) in the first display area (201) in response to the display switching instruction, and the display device (110) comprises the first display area (201) and the second display area (202).

7. The display method according to claim 6, wherein the display switching instruction is further configured to instruct a display interface in the second display area (202) to be switched from the second interface to the first interface, and the first interface comprises at least two display elements;
preferably, the method further comprises:
displaying the first interface in the second display area (202) in response to the display switching instruction, wherein layout positions of the display elements in the first interface within the second display area (202) are adaptively determined according to a position of the second display area (202) of the display device (110).

8. The display method according to claim 1, wherein the layout positions of the display elements in the second interface within the first display area (201) are determined by:
determining an optimal observation field of view area in the first display area (201) according to the position of the first display area (201) of the display device (110); and
adjusting display elements satisfying a preset condition in the second interface to the optimal observation field of view area, wherein the preset condition comprises that the display elements are ranked in a top preset number in priority in descending order, or priorities of the display elements are greater than a preset threshold.

9. The display method according to claim 8, wherein audiences of the display device (110) comprise a first user and a second user, and an optimal observation field of view area corresponding to the first user in the first display area (201) is different from an optimal observation field of view area corresponding to the second user in the first display area (201).

10. The display method according to claim 8, wherein the priorities of the display elements in the second interface are determined according to at least one of the following: degrees of importance of the display elements; or degrees of attention of a user to the display elements.

11. The display method according to claim 1, wherein a designated display element in the second interface displayed in the first display area (201) has a target display effect, and the designated display element is a display element located in an optimal observation field of view area in the first display area (201).

12. The display method according to claim 1, wherein the first interface comprises at least two cards, the second interface comprises at least two cards, and the cards, comprised in the first interface are different from the cards, comprised in the second interface, wherein each card, comprises at least one display element.

13. A display device (110), comprising:
a reception module (111), configured to receive a display switching instruction for a first display area (201) of the display device (110) in a vehicle, wherein the display switching instruction is configured to instruct a display interface in the first display area (201) to be switched from a first interface to a second interface, and the second interface comprises at least two display elements; and
a first display module (112), configured to display the second interface in the first display area (201) in response to the display switching instruction, wherein layout positions of the display elements in the second interface within the first display area (201) are adaptively determined according to a position of the first display area (201) of the display device (110).

14. A vehicle, comprising:
the display device (110) according to claim 13.

15. A computer program product, comprising: a computer program, wherein the computer program, when executed by a processor, implements steps of the display method according to any one of claims 1 to 12.
